# EUROPEAN PATENT SPECIFICATION

(11) **EP 1 060 617 B1**
(45) Date of publication and mention of the grant of the patent: **06.05.2004**
(21) Application number: 99938029.8
(22) Date of filing: 25.02.1999
(51) Int. Cl.: H04N 5/445, H04N 7/173

(54) **PROGRAM GUIDE SYSTEM WITH MONITORING OF ADVERTISEMENT USAGE AND USER ACTIVITIES**
PROGRAMMFÜHRERSYSTEM MIT ÜBERWACHUNG VON WERBENUTZUNG UND NUTZERAKTIVITÄTEN
SYSTEME GUIDE D'EMISSIONS TELEVISEES PERMETTANT DE CONTROLER L'UTILISATION DES ANNONCES ET LES ACTIVITES DES UTILISATEURS

(30) Priority: 04.03.1998 US 34939; 15.05.1998 US 85607 P; 25.08.1998 US 139798
(43) Date of publication of application: 20.12.2000
(60) Divisional application: 02075459.4
(73) Proprietor: United Video Properties Inc., Tulsa, Oklahoma 74136-5422 (US)
(72) Inventor: THOMAS, William, L., Bixby, OK 74008 (US); HASSELL, Joel, G., Arvada, CO 80005 (US); KNUDSON, Edward, B., Littleton, CO 80127 (US); MARSHALL, Connie, T., Muskogee, OK 74401 (US); LEMMONS, Thomas, R., Sand Springs, OK 74063 (US); BOYER, Franklin, E., Cleveland, OK 74020 (US); BEREZOWSKI, David, M., Tulsa, OK 74133 (US); KERN, Donald, C., Broken Arrow, OK 74011 (US); ELLIS, Michael, D., Boulder, CO 80304 (US)
(74) Representative: Hale, Peter
(86) International application number: PCT/US1999/004042
(87) International publication number: WO 1999/045700

(56) References cited:
- WO-A-97/49242
- US-A- 5 534 911
- US-A- 5 559 548
- US-A- 5 559 549
- US-A- 5 600 364

## Description

### Background of the Invention

This invention relates to interactive television program guides, and more particularly, to techniques for monitoring advertising that is provided with interactive television program guides and for monitoring user activities such as user television viewing activities.

In some passive television program guides, such as the system shown in Davis et al, US Patent 5559548, video is provided on television channel that includes program listings and advertisements are displayed together. International Patent application No. WO97/49242 relates to a television schedule system which includes a program guide having a schedule information area that depicts the programs that are being presented during the day. A viewer may browse through the schedule information area and/or obtain more information about programs of particular interest.

US patent no. 5600364 describes a network controller for use with a digital cable headend. A program control information signal at the cable headend is modified before being transmitted to each set top terminal. This signal is used with polling methods to receive upstream data from the set top terminal. Upstream data retrieval gathers all data received and compiles viewer demographics information and programs watched information. This data and information is processed to generate packages and advertisements as well as account and billing reports targeted towards each set top terminal.

Interactive television program guides allow television users to view television program listings on their televisions. Other functions that are provided by such program guides include the ability to display program listings in various formats, to perform genrebased searches for programs of interest, to support pay-per-view ordering, etc. Interactive program guides are typically implemented on microprocessor-based set top boxes. Program listings data is transmitted to the set-top boxes from a centralized data distribution facility via the user's cable system headend. The program listings data is typically stored in memory in the set-top box, where it may be accessed by the interactive program guide.

Interactive program guides may be used to display advertisements, as described in Knudson et al. International patent application No. WO99/45702, published 10 September 1999, Knudson et al. International patent application No. WO99/56466, published 4 November 1999, and Knudson et al. International patent application No. WO99/56473, published 4 November 1999. Program guide advertisements provide the user with useful information on various products and services. For example, program guide advertisements may be used to promote upcoming television programs. Program guide advertisements may also be used to promote non-programming products and services. For example, the user may be presented with an opportunity to purchase a product or service by selecting an interactive advertisement.

In order to determine the effectiveness of advertisements, it would be desirable to be able to monitor how often advertisements are displayed and selected by the user. It would also be desirable to be able to monitor which program guide screens the advertisements are displayed on and which program guide screens the user activates in general. Monitoring of user viewing activities and the user's use of non-program guide applications would also be desirable. Monitoring these types of information with a program guide would allow advertisements to be used most effectively. The information might also be used to provide program guide services,that would otherwise not be possible.

In view of the foregoing, it is an object of the present invention to provide an interactive television program guide system in which advertisement usage and user activities are monitored by the guide.

The present invention is set out in the independent claims. Some optional features are set out in the claims dependent thereto.

According to one embodiment, there is provided an interactive television program guide system in which the usage of advertisements by users of the interactive television program guide may be monitored. Advertisement usage may be monitored by determining which advertisements are transmitted from a television distribution facility to user television equipment (e.g., to the set-top boxes of various users). Advertisement usage may also be monitored by determining which advertisements are received at the user television equipment. Another way in which advertisement usage may be monitored is by determining which advertisements are displayed during use of the program guide.

The system may monitor which program guide screens are accessed by users most frequently. Information such as which advertisements are used and which screens are displayed may be analyzed to determine the relative value of various advertisements and program guide screens.

If desired, information on the television viewing activities of users may be collected. Such information may include information on whether a user has blocked the audio of a program by using a mute function or has blocked all or some of the video of a program by displaying a graphic overlay of some type (e.g., a program guide display, etc.) on top of a program. The information collected on viewing activities may also include information on when the user last interacted with the program guide (which is indicative of whether the user is still watching the program or has left the room).

The use of non-program guide applications by the user may also be monitored. For example, the program guide may monitor which video games are played by the user. Information on the programs that are watched by the user and the non-program guide applications that are run by the user may be collected by the system in real time. This information may then be analyzed to determine real-time ratings. For example, real-time ratings for the most popular television programs in the nation may be generated. Real-time ratings may also be generated for non-program guide applications.

Further features of the invention, its nature and various advantages will be more apparent from the accompanying drawings and the following detailed description of the preferred embodiments.

### Brief Description of the Drawings

FIG. 1 is a diagram of an illustrative interactive television program guide system in which advertisement usage may be monitored in accordance with the present invention.
FIG. 2 is a diagram illustrating how an advertisement for a program may be displayed as part of a program guide screen and how the user may be presented with various program guide options related to the advertised program when the user selects such an advertisement in accordance with the present invention.
FIG. 3 is a diagram illustrating how an advertisement for a product or service may be displayed as part of a program guide screen and how the user may be presented with an opportunity to order the advertised product or service when the user selects such an advertisement in accordance with the present invention.
FIG. 4 is a diagram showing some of the monitoring functions that may be provided by the interactive television program guide system in accordance with the present invention.
FIG. 5 is a diagram of an illustrative data structure showing various types of data that may be collected regarding advertisement usage in accordance with the present invention.
FIG. 6 is a diagram of an illustrative data structure showing various types of data that may be collected regarding usage of different screens in the program guide in accordance with the present invention.
FIG. 7 is a diagram of an illustrative data structure showing various types of data that may be collected regarding program viewing by the user in accordance with the present invention.
FIG. 8 is a diagram of an illustrative data structure showing various types of data that may be collected regarding usage of non-program-guide applications by the user in accordance with the present invention.
FIG. 9 is a diagram showing steps involved in performing the data collection and analysis functions of the interactive program guide system in accordance with the present invention.
FIG. 10a is an illustrative program guide display screen containing real-time ratings information in accordance with the present invention.
FIG. 10b is an illustrative flow chart of steps involved in allowing a user to select a listing from the real-time ratings screen of FIG. 10a in accordance with the present invention.
FIG. 11 is a flow chart of illustrative steps involved in providing real-time ratings in accordance with the present invention.
FIG. 12 is a flow chart showing steps involved in gathering information for a number of separate user profiles and processing this information in accordance with the present invention.
FIG. 13 is a flow chart of steps involved in filtering out less important data in accordance with the present invention.
FIG. 14 is a diagram showing how data filters may be located at user television equipment or a data processing facility in accordance with the present invention.
FIG. 15 is a diagram showing how a data filter may involve filtering out less important data based on specific advertisements or actions or may involve filtering out less important data based on viewer demographics in accordance with the present invention.

### Detailed Description of the Preferred Embodiments

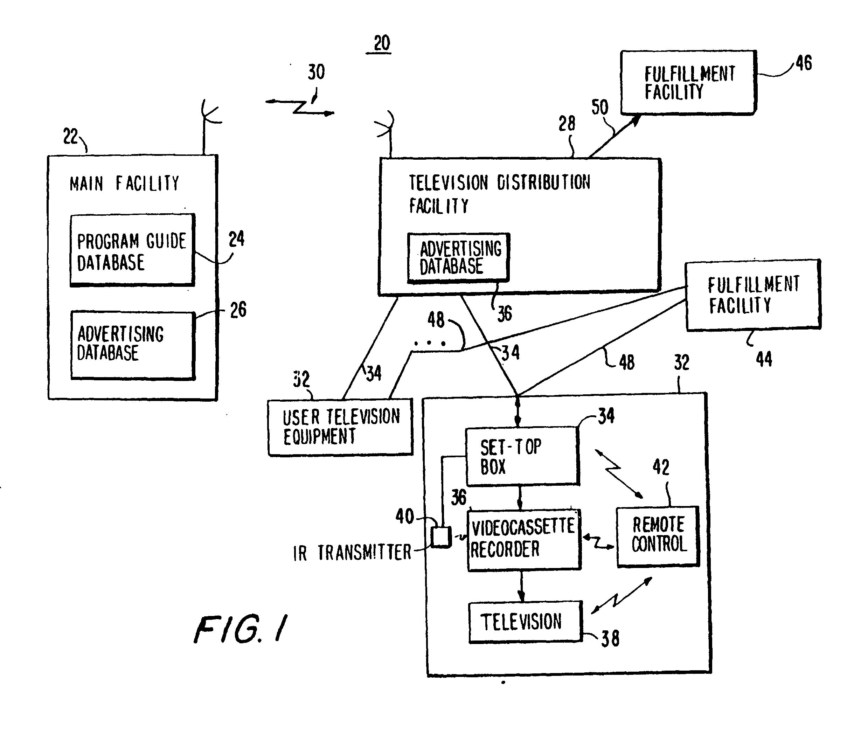

An illustrative interactive television program guide system 20 in accordance with the present invention is shown in FIG. 1. Main facility 22 contains a program guide database 24 for storing program guide information such as television program guide listings data, pay-per-view ordering information, television program promotional information, etc. Main facility 22 also contains an advertising database 26 for storing advertising information. Information from databases 24 and 26 may be transmitted to multiple television distribution facilities such as television distribution facility 28 via communications links such as communications link 30. Link 30 may be a satellite link, a telephone network link, a cable or fiber-optic link, a microwave link, a combination of such links, or any other suitable communications path. If it is desired to transmit video signals (e.g., for advertising and promotional videos) over link 30 in addition to data signals, a relatively high bandwidth link such as a satellite link is generally preferable to a relatively low bandwidth link such as a telephone line.

Television distribution facility 28 is a facility for distributing television signals to users, such as a cable system headed, a broadcast distribution facility, or a satellite television distribution facility.

The program guide information transmitted by main facility 22 to television distribution facility 28 includes television program listings data such as program times, channels, titles, descriptions, etc. Transmitted program information also includes pay program data such as pricing information for individual programs and subscription channels, time windows for ordering programs and channels, telephone numbers for placing orders that cannot be impulse ordered, etc.

The advertising information transmitted by main facility 22 to television distribution facility 28 may include text, graphics, and video advertisements for various programs, products, and services. Advertisements may be distributed from main facility 22 to multiple television distribution facilities 28, although only one television distribution facility 28 is shown in FIG. 1 to avoid over-complicating the drawing.

Each television distribution facility 28 distributes advertisements to users at associated user television equipment 32 via communications links 34. If desired, some advertising information may be provided using advertising database 36 in television distribution facility 28.

User television equipment 32 may be any suitable equipment for providing television to the user that contains sufficient processing capabilities to implement an interactive television program guide. Paths 34 may be cable links, fiber-optic links, satellite links, broadcast links, or other suitable link or combination of such links. Any suitable communications scheme may be used to transmit data over paths 34, including in-band transmissions, vertical blanking interval transmissions, out-of-band transmissions, digital transmissions, analog transmissions, cable transmissions, satellite transmissions, over-the-air transmissions, multichannel multipoint distribution services (MMDS) transmissions, etc.

The data distribution technique that is used to distribute data on paths 34 depends on the type of information that is being distributed. For example, text and graphics may be distributed over an out-of-band channel using an out-of-band modulator. Video information may also be distributed in this way, although large quantities of video information may be more efficiently distributed using one or more digital channels on path 56. Such digital channels may also be used for distributing text and graphics.

Each user has a receiver, which is typically a set-top box such as set-top box 34, but which may be other suitable television equipment such as an advanced television receiver into which circuitry similar to set-top-box circuitry has been integrated or a personal computer television (PC/TV). Data such as program guide data may be distributed to set-top boxes 34 periodically. Television distribution facility 28 may also poll set-top boxes 34 periodically for certain information (e.g., pay program account information or information regarding programs that have been purchased and viewed using locally-generated authorization techniques).

Main facility 22 preferably contains a processor to handle information distribution tasks. Each set-top box 34 preferably contains a processor to handle tasks associated with implementing the interactive television program guide. Television distribution facility 28 may contain a processor for handling tasks associated with data distribution.

Each set-top box 34 is typically connected to an optional videocassette recorder 36 so that selected television programs may be recorded. Each videocassette recorder 36 is connected to a television 38. To record a program, the interactive television program guide implemented on set-top box 34 tunes set-top box 34 to a particular channel and sends control signals to videocassette recorder 36 using, e.g., infrared transmitter 40, that direct videocassette recorder 36 to start and stop recording at the appropriate times.

During use of the program guide, television program listings, advertisements, and other information may be displayed on television 38. Each set-top box 34, videocassette recorder 36, and television 38 may be controlled by one or more remote controls 42 or any other suitable user input interface such as a wireless keyboard, mouse, trackball, dedicated set of keys, etc. A typical remote control 42 has cursor keys for positioning a highlight region on the program guide screen and an OK or select button for selecting a highlighted item on the screen. Other typical remote control buttons include buttons such as a record button, channel up and down buttons, volume control buttons, numeric keys, etc.

Communications paths 34 preferably have sufficient bandwidth to allow television distribution facility 28 to distribute television programming, program listings information, advertisements, and other information to user television equipment 32. Multiple television and audio channels (analog, digital, or both analog and digital) may be provided to user television equipment 32 via communications paths 34. If desired, certain data such as program listings data may be distributed by one or more distribution facilities that are separate from television distribution facility 28 using communications paths that are at least partly separate from communications paths 28.

Certain functions, such as pay program purchasing, the purchasing of products or services, and data collection functions, may require that user television equipment 32 transmit data to television distribution facility 28 over communications paths 34. If desired, such data may be transmitted over telephone lines or other separate communications paths. If functions such as these are provided using facilities separate from television distribution facility 28, some of the communications involving user television equipment 32 may be made directly with the separate facilities.

Users of the interactive television program guide may interactively order additional information, products, or services. For example, a user may place an order by selecting an advertisement displayed in the program guide. Such orders may be satisfied by fulfillment facilities 44 and 46. If desired, orders may be transmitted directly to fulfillment facilities such as fulfillment facility 44 via links 48, which may be telephone links, the Internet, or other suitable communications links. Orders may also be transmitted to television distribution facility 28 via links 34, where the billing system of the television distribution facility may be used. After the television distribution facility 28 has processed the user's order, television distribution facility 28 may transmit the order to fulfillment facility 46 via link 50.

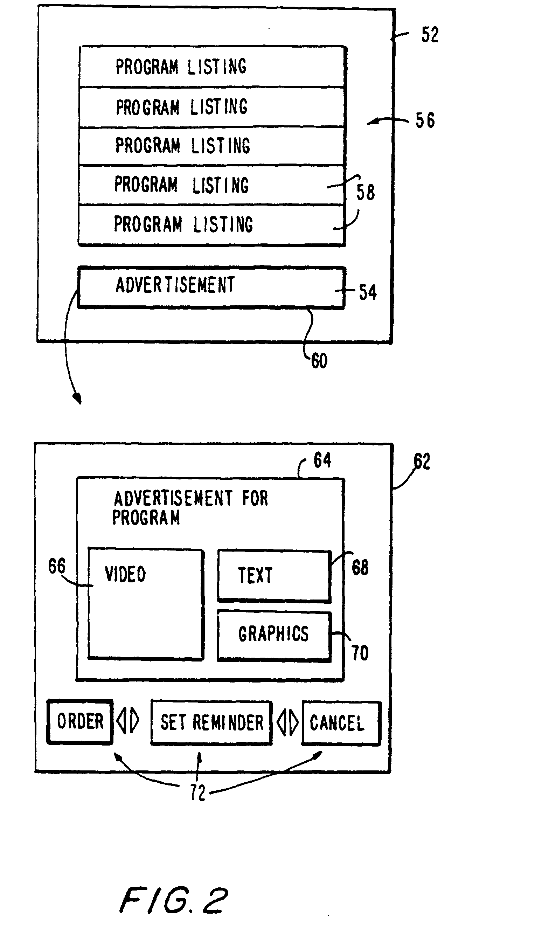

An illustrative program guide screen 52 containing an advertisement 54 is shown as the upper screen of FIG. 2. Screen 52 contains program listings region 56, which includes a number of program listings 58 for various television programs. The program listings 58 in program listings region 56 may be displayed in any of a number of suitable formats such as listings ordered by time or by channel, listings grouped by genre, etc. Advertisement 54 may be selected by the user by positioning highlight 60 on advertisement 54 using remote control cursor keys and pressing an OK or select button.

Advertisement 54 may be, for example, an advertisement for an upcoming television program. As shown in the lower screen of FIG. 2, selecting advertisement 54 may direct the program guide to display a screen 62 that contains a more detailed advertisement 64 for that program. Advertisement 64 and other advertisements in the program guide may contain video 66, text 68, and graphics 70. Screen 62 may contain options 72 that allow the user to order the advertised program (if the program is a pay-per-view program), set a reminder for the program, or cancel the advertisement.

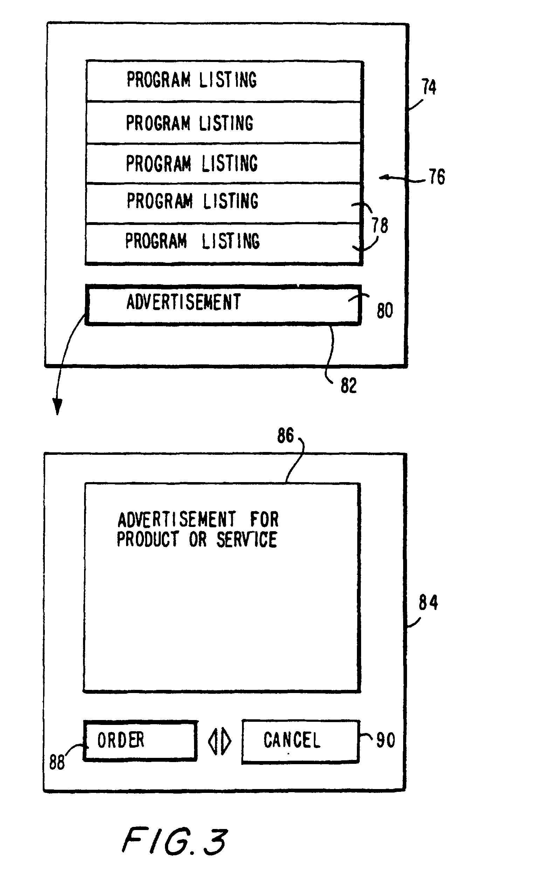

Advertisements may also be used to promote products and services. As shown in FIG. 3, program guide screen 74 contains a program listings region 76 that contains a number of program listings 78. Screen 74 also contains an advertisement 80 for a product or service. The user may select advertisement 80 by positioning highlight 82 on advertisement 80 using remote control cursor keys and pressing a select or OK button.

Selecting advertisement 80 directs the program guide to display program guide screen 84, which is shown as the lower screen in FIG. 3. Screen 84 typically contains more detailed advertising information 86 on the product or service being promoted. Screen 84 also contains an order option 88 for ordering the product or service (using, e.g., fulfillment facility 44 or 46) and a cancel option 90 for cancelling the screen 84.

Program guide screens 52 and 62 of FIG. 2 and program guide screens 74 and 84 are illustrative only. Any other suitable interactive television program guide screen may be provided in the program guide if desired. Such program guide screens may or may not include advertisements and program listings.

In order to measure the effectiveness of certain advertisements, system 20 may monitor how advertisements are distributed to user television equipment 32. System 20 may also monitor the location in the program guide where the advertisements are displayed and may monitor how often advertisements are displayed. System 20 may also monitor usage of various program guide screens (even if no advertisements are present). If desired, information on the user's viewing activities may be monitored. The program guide may also collect information on which non-program-guide applications the user runs. Any other suitable type of information on the user's activities or use of the program guide may be monitored if desired. The data that is collected on the user's activities may be analyzed at any suitable data processing facility, such as a data processor located at main facility 22 of FIG. 1, television distribution facility 28 of FIG. 1, or any other suitable facility or facilities.

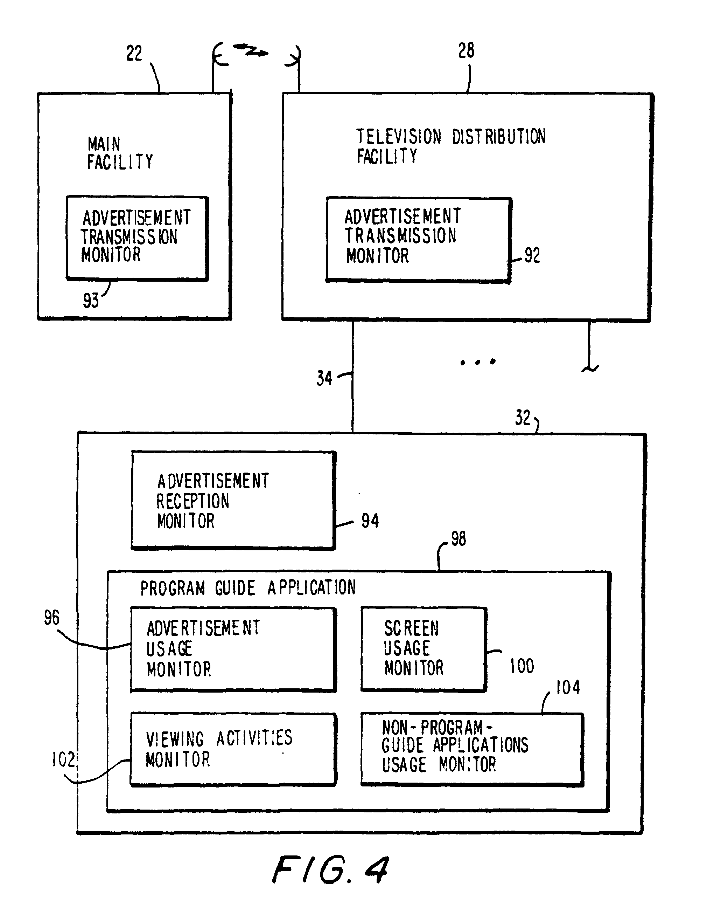

As shown in FIG. 4, television distribution facility 28, main facility 22, or both may be provided with advertisement transmission monitors 92 and 93 to monitor each advertisement as it is transmitted from main facility 22 to television distribution facility 28 and as it is transmitted from television distribution facility 28 to user television equipment 32. This arrangement is advantageous in situations in which, for example, main facility 22 or television distribution facility 28 performs tasks associated with analyzing the collected data.

Advertisement distribution may also be monitored using an advertisement reception monitor 94 in the user television equipment 32 of each user. Advertisement reception monitor 94 keeps track of which advertisements are received by user television equipment 32.

Another way in which advertisement usage may be monitored is with advertisement usage monitor 96. Advertisement usage monitor 96 collects information on which advertisements are displayed by the program guide. Advertisement usage monitor 96 is shown as being part of program guide application 98. Other suitable usage monitors that may be provided as part of program guide application 98 include screen usage monitor 100 (for collecting information on which screens are visited by the user), viewing activities monitor 102 (for collecting information on which programs the user watches), and non-program-guide applications usage monitor 104 (for collecting information on which applications are used by the user other than the program guide.

If desired, one or more of monitors 96, 100, 102, and 104 may be implemented on user television equipment 32 fully or partially separate from program guide application 98. Advertisement reception monitor may also be fully or partially incorporated into program guide application 98 if desired. The arrangement of FIG. 4 is illustrative only. Any other suitable monitor arrangement may be used if desired. For example, it may not generally be necessary to provide three advertisement monitors (i.e., monitors 92, 94, and 96), only one or two such monitors may be satisfactory.

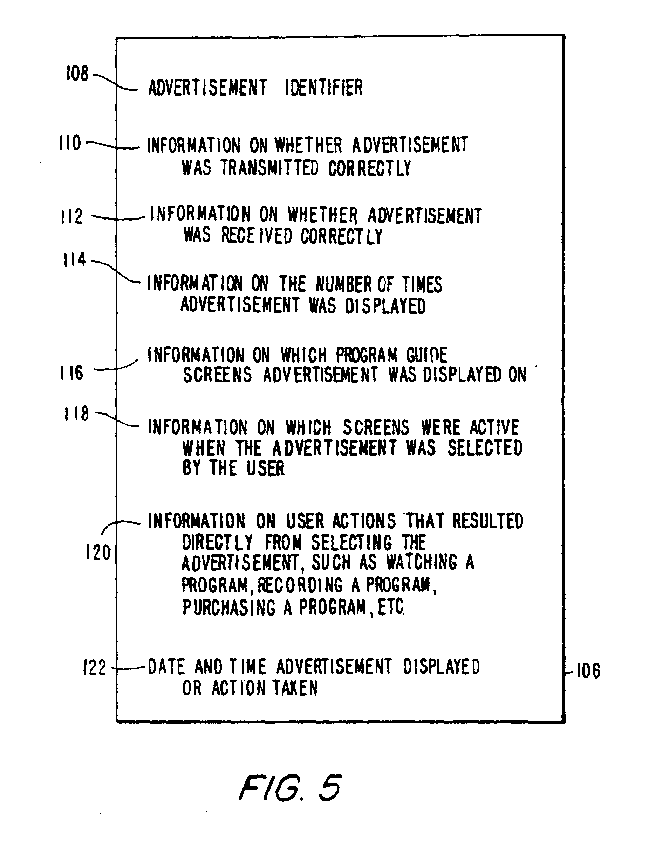

When monitoring usage of an advertisement, system 20 may collect a number of different items of data. An illustrative advertisement usage data structure 106 that may be used by system 20 in collecting advertisement usage data is shown in FIG. 5. Data structure 106 preferably contains a unique advertisement identifier 108 for identifying the advertisement to which the data in data structure 106 relates.

If transmission monitors such as advertisement transmission monitors 92 and 93 of FIG. 4 are used, data structure 106 may contain information 110 on whether the advertisement was transmitted correctly from main facility 22 (FIGS. 1 and 4) to television distribution facility 28 (FIGS. 1 and 4) and whether the advertisement was transmitted correctly from television distribution facility 28 (FIGS. 1 and 4) to user television equipment 32 (FIGS. 1 and 4).

If a reception monitor such as advertisement reception monitor 94 of FIG. 4 is used, data structure 106 may contain information 112 on whether the advertisement that was transmitted from television distribution facility 28 (FIGS. 1 and 2) to user television equipment 32 (FIGS. 1 and 2) was received correctly by user television equipment 32.

If an advertisement usage monitor such as advertisement usage monitor 96 of FIG. 4 is used, data structure 106 may contain various data on when and where in the program guide the advertisement was displayed. For example, data structure 106 may contain information 114 on the number of times that the advertisement was displayed. Data structure 106 may also contain information 116 on which program guide screens the advertisement was displayed on. Data structure 106 may contain information 118 on which program guide screens was active each time the advertisement was selected by the user. Another type of information that data structure 106 may be provided with is information 120 on the user actions that resulted directly from the user's selection of the advertisement. Information 120 may also include information on actions taken automatically by the program guide. The actions included in information 120 may include watching a program, recording a program, purchasing a program, etc. If desired, the date and time the advertisement or action was taken in the program guide may be monitored and appropriate information 122 may be stored in data structure 106.

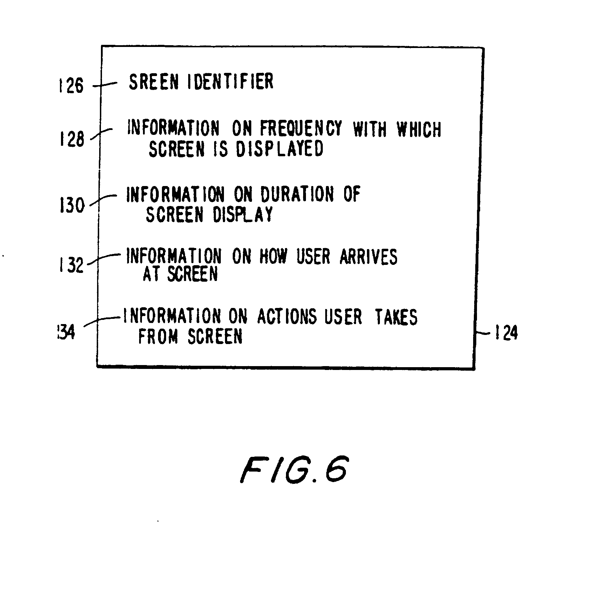

If system 20 contains a screen usage monitor such as screen usage monitor 100 of FIG. 4, the system may maintain data structures such as screen usage data structure 124 of FIG. 6. Data structure 124 may include information 126 that uniquely identifies the interactive television program guide screen viewed by the user. Data structure 124 may also contain information 128 on the frequency with which the program guide screen is displayed. Information 130 may be provided in data structure 124 on the duration for which the screen is displayed. If desired, information 132 may be provided in data structure 124 on how the user arrived at the screen (e.g., which menu options were selected to allow the user to navigate through the program guide to the screen). Data structure 124 may also include information 134 on which actions the user takes from the screen.

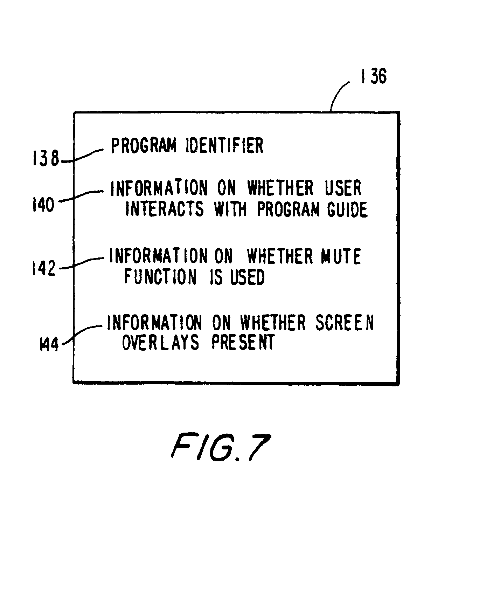

If system 20 contains a viewing activities monitor such as viewing activities monitor 102 of FIG. 4, the system may maintain data structures such as viewing activities data structure 136 of FIG. 7 to keep track of the programs that each viewer watches. Data structure 136 preferably contains a program identifier 138 for uniquely identifying the program watched by the user. Data structure 136 may also contain information 140 on whether the user interacts with the program guide while the program is displayed. If the user is not interacting with the program guide, then it is possible that the user has left the room and is no longer watching the program. The time elapsed from the last user interaction may be used by the program guide in evaluating ratings for various programs. Another type of information that may be included in data structure 136 relates to information on whether the user has blocked the audio or video of the program that is being displayed. This also indicates that the user is not actively watching the program. Information on blocked audio or video may include information 142 on whether the user has invoked an audio mute function or information 144 on whether any screen overlays are present while the program is displayed.

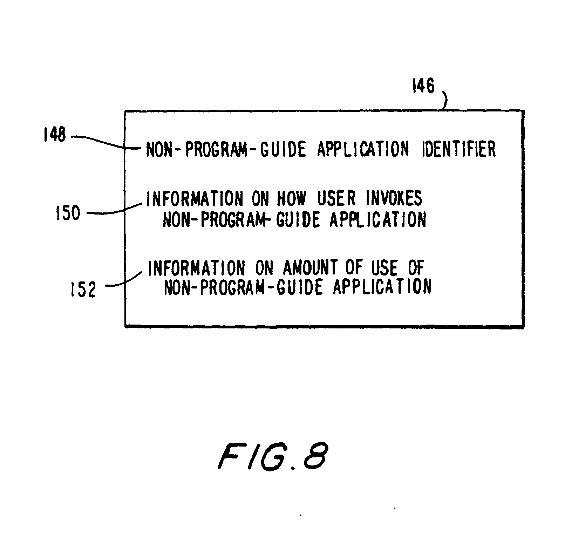

If system 20 contains a non-program-guide monitor such as non-program-guide monitor 104 of FIG. 4, the system may maintain data structures such as non-program-guide application data structure 146 of FIG. 8 to keep track of which non-program-guide applications are used. Examples of such non-program-guide applications include set-top based video games, home shopping applications, web browser applications, home banking applications, etc. Data structure 146 preferably contains a non-program-guide application identifier 148 that uniquely identifies which non-program-guide application is being used. Data structure 146 may also include information 150 on how the user invokes the application (e.g., whether or not the user invokes the non-program-guide application from the program guide, which program guide screen the user invokes the application from, etc.) Information 152 may also be included in data structure 146 on the amount of use of the non-program-guide application.

Data structures such as data structure 106, data structure 124, data structure 136, and data structure 146 may be collected in various locations within system 20 and may be distributed and maintained in various locations within system 20. For example, such data structures may be collected in whole or in part in user television equipment 32 (FIGS. 1 and 2) and passed to television distribution facility 28 or other suitable data processing facility for analysis. Another suitable location for data processing is main facility 22 or a separate data processing facility. After the collected data is processed, the results may be used at any suitable locations within system 20, such as at main facility 22, television distribution facility 28, or user television equipment 32.

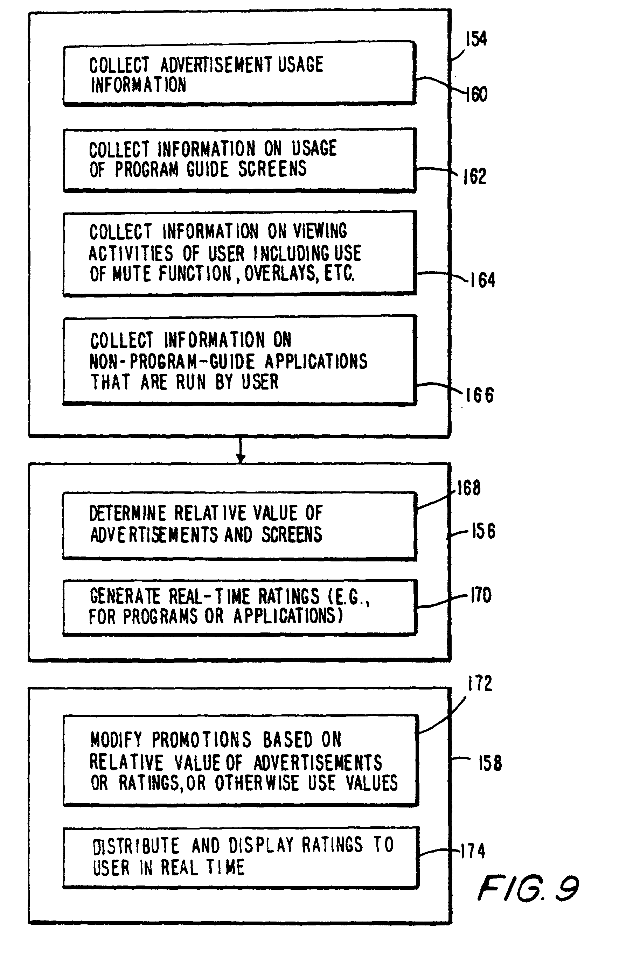

Steps involved in monitoring various activities with system 20 are shown in FIG. 9. Steps 154 involve information collection. Steps 156 involve data analysis. Steps 158 involve using the results of the data analysis. Although shown in FIG. 9 as steps that may be performed successively, steps 154, 156, and 158 and their substeps may be performed (in whole or in part) in any suitable order or concurrently if desired. Moreover, these steps are only illustrative, any other information collection, data analysis, and data analysis usage steps may be performed by system 20 if desired.

At step 160, information on advertisement usage is collected (e.g., by one or more advertisement monitors such as advertisement monitors 92, 94, and 96 of FIG. 4). At step 162, information on the user's use of various program guide screens is collected. At step 164, information is collected on the viewing activities of the user (e.g., which programs the user watches and what audio and video blocking functions are used). At step 166, information is collected on the non-program-guide applications run by the user.

At step 168, the collected information is used to determine the relative value of various advertisements and various program guide screens. For example, if it is determined that users very frequently view a particular program guide screen and often select advertisements that appear on that particular screen, it can be concluded that that particular program guide screen is a valuable location to place advertisements within the program guide. If it is determined that a certain advertisement is selected frequently regardless of its location within the program guide, it may be concluded that that type of advertisement is effective.

At step 170, the information collected in step 154 is used to generate real-time ratings such as real-time ratings of how popular (or unpopular) certain television programs are or real-time ratings indicating which non-program-guide applications such as video games are being used most (or least) often.

At step 172, information on the relative value of different advertising locations determined at step 168 may be used in modifying various advertising promotions. Information on the relative values of advertising locations may also be used to generate advertising rates for sales personnel to use in selling advertisements. If desired, information on the value of different program guide locations may be used to automatically charge advertisers fees that are proportional in some respect to the value received when advertisements are placed in various locations. Information on the value of advertising locations within the guide may also be used in redesigning guides to maximize advertising effectiveness. Information on a particular advertisement's effectiveness may be used to design other advertisements of the same type.

At step 174, the real-time ratings information generated at step 170 may be distributed to user television equipment 32 and displayed (e.g., on each user's television 38). Real-time ratings information may include information on which programs are being watched or which video games or other applications are being used.

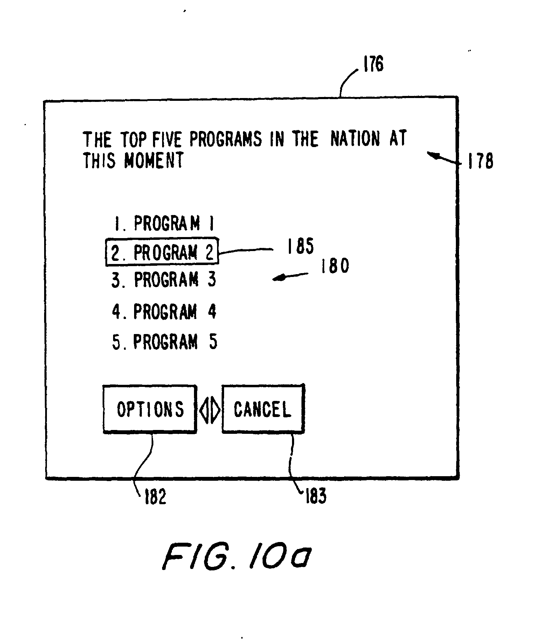

Real-time ratings may be provided to users at user television equipment 32 for display on television 38 in real time. An illustrative real-time ratings program guide screen 176 is shown in FIG. 10a. The user may direct the program guide to display screen 176 by pressing a suitable remote control button or selecting a suitable menu option. The program guide may also provide real-time ratings information to the user automatically. Screen 176 contains title 178, real-time ratings information 180, options button 182, and cancel button 183 (for cancelling screen 176). In the example of FIG. 10a, screen 176 is shown as displaying information related to the current top five programs in the nation. By selecting options button 182, the user may be provided with suitable opportunities to direct the program guide to display other types of real-time ratings information.

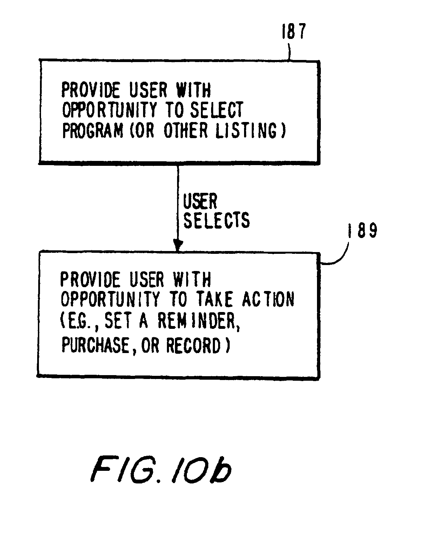

If desired, the program guide may provide a movable highlight region such as highlight region 185. The user may use highlight region to select a program of interest from the programs listed on real-time ratings screen 176. The program guide may provide the user with an opportunity to take various actions with respect to the selected program. For example, the program guide may allow the user to set a reminder for . the selected program. The program guide may also allow the user to purchase the selected program if the selected program is a pay-per-view program. If desired, the program guide may provide the user with an opportunity to set up a recording of the selected program. Steps involved in this process are shown in FIG. 10b. At step 187 the program guide provides the user with an opportunity to select a desired listing (e.g., a program). At step 189, after the user has selected a listing, the program guide provides the user with an opportunity to take an action in the program guide, e.g., to set a reminder for a program, to purchase a pay-per-view program, or to record a program.

The real-time ratings screen may be presented as a full screen or as a partial screen overlay (e.g., over a television program that the user is watching).

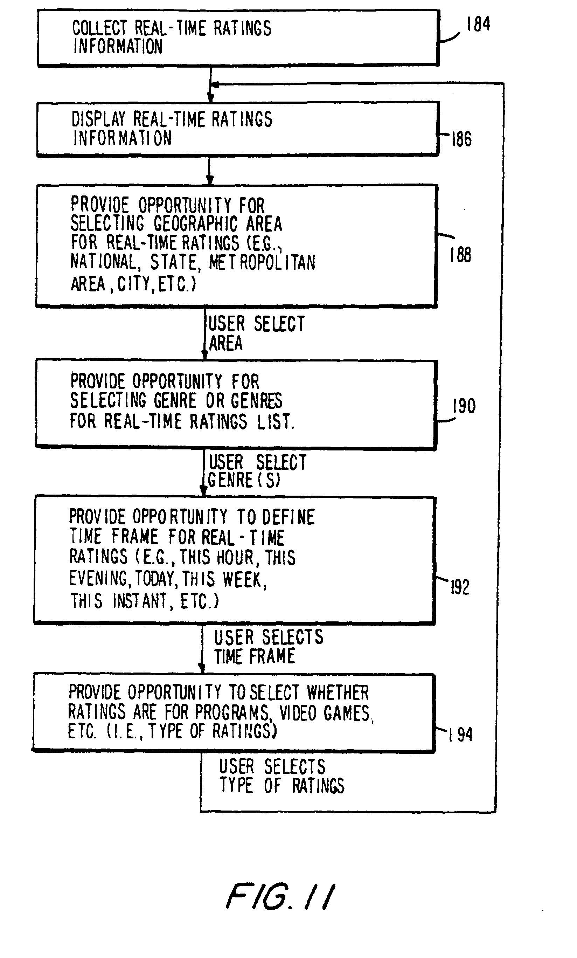

Steps involved in handling real-time ratings information are shown in FIG. 11. At step 184, system 20 collects real-time ratings information (e.g., by monitoring the viewing activities of the user with viewing activities monitor 102). Collecting the ratings information typically involves the use of a data processor, which may be located at main facility 22, television distribution facility 28, or other suitable data processing facility. At step 186, the real-time ratings information may be displayed (by the program guide or other suitable application or passively on a special television channel) on user television equipment 32 using a screen such as real-time ratings screen 176 of FIG. 10a or any other suitable display format.

When the user selects options button 182, the user is provided with opportunities to select the type of real-time ratings information that the user desires to view. For example, at step 188, the user is provided with an opportunity to select the geographic area for which real-time ratings information is desired. The user may direct the program guide to display real-time ratings information for the nation, for a state, for a metropolitan area, a city or town, or any other suitable geographic area. At step 190, an opportunity is provided for the user to select a programming genre or genres of interest (e.g., sports, movies, comedy, etc.). If the user selects the genre sports, real-time ratings for sports-related programs may be displayed on screen 176 of FIG. 10a. If the user selects the genres movies and comedy, the top five comedy movies may be displayed on real-time ratings screen 176 of FIG. 10a. At step 192, an opportunity is provided for the user to define a suitable time frame for the real-time ratings. For example, the user may opt to have real-time ratings displayed for programs during the last hour, programs for the current evening, programs for the current week, or programs being aired at that instant, etc. These time frames are illustrative and any other suitable time frames or combination of time frames may be used if desired. At step 194, the user is provided with an opportunity to select the type of ratings that the user wishes to view. For example, the user may opt to have real-time ratings information displayed for television programs (e.g., the top five movies being viewed on television this evening in the nation). The user may also opt to have real-time ratings information displayed for set-top applications such as video games (e.g., the top five video games being played in the metropolitan area at this instant). These are only illustrative examples of the types of ratings information that may be displayed. Any other suitable ratings information may be displayed if desired.

After the user has selected from the options presented at steps 188, 190, 192, and 194, real-time ratings information is displayed again at step 186. Although the opportunities provided in steps 188, 190, 192, and 194 are preferably opportunities that are provided by the interactive program guide implemented on user television equipment 32, these steps may be provided using any other suitable application implemented on user television equipment 32 or system 20 if desired. Moreover, steps 188, 190, 192, and 194 are merely illustrative examples of the type of configuration options that may be provided to the user. Any other suitable configuration options for the real-time ratings feature may be provided if desired.

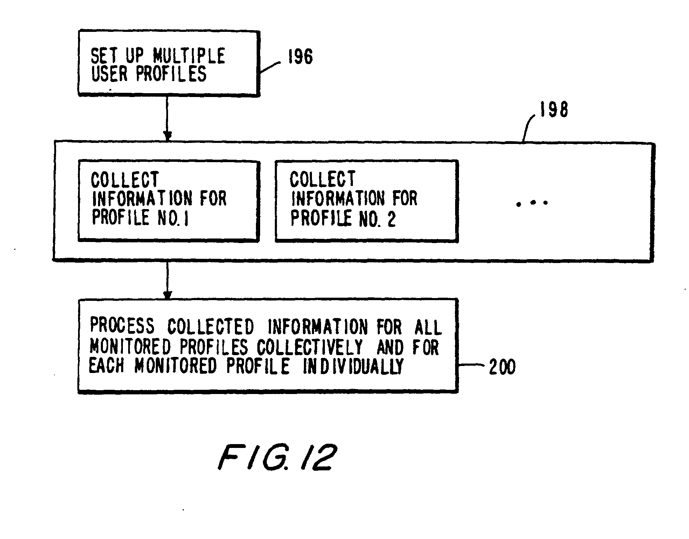

The program guide may support multiple user profiles. For example, each user may set up a profile with a different set of favorite channels. The program guide may ascertain which users are watching a given program by determining which profiles are currently active. Steps involved in monitoring the viewing activities of users in a system with multiple user profiles are shown in FIG. 12. At step 196, the program guide allows the users to set up multiple user profiles. At step 198, the program guide collects information for each of the active profiles. The information collection processes that are used during step 198 may be run concurrently. At step 200, the collected information for the monitored profiles is processed. If multiple profiles were active, the system can use this information to determine the probable number of viewers for a television program. For example, if three profiles were active during a given program, the system may conclude that there were at least three viewers for the program. The system can also process the collected information for each monitored profile individually to provide a more detailed picture of the viewership of the program.

If necessary to reduce the amount of data collected in the system, information may be collected from a subset of users. Information may also be collected from the user television equipment 32 of substantially all of the users in system 20 if it is desired to provide the most accurate usage data possible. Data collected by each user's user television equipment 32 may be uploaded to a central data processing location periodically. For example, data uploading may be performed over a cable return path such as link 34 or a telephone modem line, or other suitable communications path. Data collection may be based on a polling cycle in which each user's user television equipment is periodically polled for the data to be collected. Data may also be transmitted from user television equipment 32 unsolicited at regular intervals. If desired, information confirming the successful transmission of the data being collected may be collected from each user's user television equipment 32 at regular intervals.

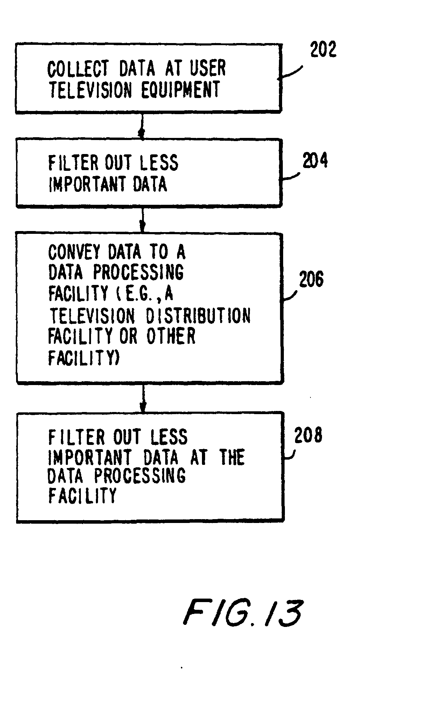

The amount of data handled by the system may be reduced by filtering out less important data at suitable stages during the data collection and data analysis processes. Steps involved in data filtering are shown in FIG. 13. At step 202, data of interest is collected at user television equipment 32. At step 204, less important data is filtered from the data collected at step 202. Step 204 may be performed at user television equipment 32 prior to data transmission. At step 206, the data is conveyed to a data processing facility, which may be for example, one of television distribution facilities 28, main facility 22, or other suitable facility. At step 208, additional data is filtered out of the collected data at the data processing facility.

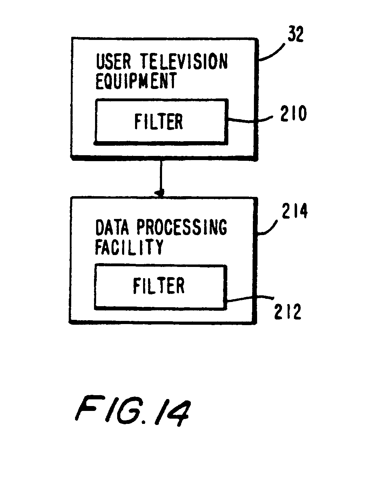

Filtering may be performed at user television equipment 32 (as in step 204) using a filter such as filter 210 in user television equipment 32 of FIG. 14. Filtering may also be performed using a filter 212 at a data processing facility 214 as shown in FIG. 14 (as in step 208). If desired, filtering may be performed at any other suitable location, or at a combination of such locations.

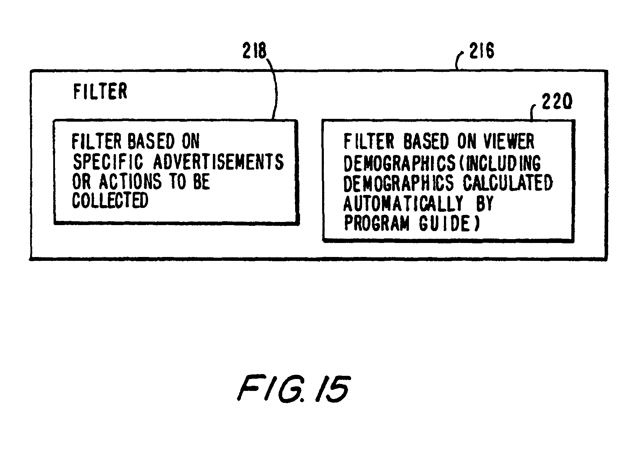

As shown in FIG. 15, a suitable data collection filter 216 may involve the use of a filter 218 that is based on specific advertisements or actions to be collected. This arrangement allows information for only a particular advertisement or set of advertisements to be collected by the system. It also allows information for only a particular action (e. g., the purchasing of a product or ordering of a pay-perview program) to be collected by the system. Data collection filter 216 may in addition or alternatively be based on a filter 220 that is based on user demographic information. This arrangement allows information to be collected for only certain demographic attributes, such as users with a certain income level, etc. The demographic attribut. es on which the operation of filter 220 is based may be automatically calculated by the program guide. A program guide with the capacity for handling advertisements based on automatic demographics information is described in Knee et al. International patent application No. WO99/60789, published 25 November 1999.

The foregoing is merely illustrative of the principles of this invention and various modifications can be made by those skilled in the art without departing from the scope of the invention.

## Claims

1. A system for monitoring advertisement usage in which interactive television program guide advertisements are displayed for users by an interactive television program guide implemented on user television equipment, wherein the system is configured to:
display the interactive television program guide advertisements on the user television equipment with the interactive television program guide;
allow the user to select certain displayed interactive television program guide advertisements using a remote control; and
collect information on which of the displayed interactive television program guide advertisements are selected by the user with the remote control; and
collect information on the location in the program guide where the interactive television program guide advertisements are displayed to determine usage of the displayed interactive television program guide advertisements in the interactive television program guide.

2. The system defined in claim 1 wherein the system is further configured to collect information on the amount that the interactive television program guide advertisements are displayed.

3. The system defined in claim 1 wherein the system is further configured to collect information on which of the interactive television program guide advertisements are displayed.

4. The system defined in claim 1 wherein the system is further configured to collect advertisement identifier information which identifies which of the interactive television program guide advertisements are displayed.

5. The system defined in claim 1 wherein the system is further configured to collect information on the number of times each of the interactive television program guide advertisement is displayed.

6. The system defined in claim 1 wherein the system is further configured to collect information on which program guide screens the interactive television program guide advertisements are displayed on.

7. The system defined in claim 1 wherein the system is further configured to collect information on which screens are active when the certain displayed interactive television program guide advertisements is selected by one of the users.

8. The system defined in claim 1 wherein the system is further configured to collect information on which user actions result directly from selection of the certain displayed interactive television program guide advertisements by one of the users.

9. The system defined in claim 1 wherein the system is further configured to collect information on the times that the interactive television program guide advertisements are displayed.

10. The system defined in claim 1 wherein the system is further configured to collect information on the times that actions are taken automatically by the program guide.

11. The system defined in claim 1 wherein the system is further configured to collect information on which screens are displayed by the program guide.

12. The system defined in claim 1 wherein the system is further configured to collect screen identifier information that uniquely identifies which program guide screens are displayed by the program guide.

13. The system defined in claim 1 wherein the system is further configured to collect information on the frequency with which certain program guide screens are displayed by the program guide.

14. The system defined in claim 1 wherein the system is further configured to collect information on the duration for which program guide screens are displayed by the program guide.

15. The system defined in claim 1 wherein the system is further configured to collect information on how users arrive at program guide screens in the program guide.

16. The system defined in claim 1 wherein the system is further configured to collect information on which television programs are displayed on the user television equipment.

17. The system defined in claim 1 wherein the system is further configured to collect information on whether a user interacts with the program guide during the display of a certain program on the user television equipment.

18. The system defined in claim 1 wherein the system is further configured to collect information on whether the user television equipment is muted during the display of a certain program on the user television equipment.

19. The system defined in claim 1 wherein the system is further configured to collect information on whether a screen overlay is present on the user television equipment during the display of a certain program on the user television equipment.

20. The system defined in claim 1 wherein the system is further configured to collect information on which non-program-guide applications are used on the user television equipment.

21. The system defined in claim 1 wherein the system is further configured to collect information with the program guide on which non-program-guide applications are used on the user television equipment.

22. The system defined in claim 1 wherein the system is further configured to collect information on how users invoke non-program-guide applications on the user television equipment.

23. The system defined in claim 1 wherein the system is further configured to collect information on the amount that non-program-guide applications are used on the user television equipment.

24. The system defined in claim 1 wherein the interactive television program guide advertisements are transmitted to the user television equipment from a television distribution facility, the system further configured to monitor when the interactive television program guide advertisements are transmitted from the television distribution facility to the user television equipment.

25. The system defined in claim 1 wherein the interactive television program guide advertisements are transmitted to the user television equipment from a television distribution facility, the system further configured to monitor when the interactive television program guide advertisements that are transmitted from the television distribution facility are received at the user television equipment.

26. The system defined in claim 1 wherein the interactive television program guide advertisements are transmitted to a television distribution facility from a main facility, the wherein the system further configured to monitor when the interactive television program guide advertisements are transmitted from the main facility to the television distribution facility.

27. The system defined in claim 1 wherein the information that is collected on the usage of the interactive television program guide advertisements in the program guide is transmitted from the user television equipment to a data processing facility, the system further configured to filter out less important information from the collected information prior to transmission of the collected information from the user television equipment.

28. The system defined in claim 1 wherein the information that is collected on the usage of the interactive television program guide advertisements in the program guide is transmitted from the user television equipment to a data processing facility, the system further configured to filter out less important information from the collected information at the data processing facility.

29. The system defined in claim 1 wherein the system is further configured to filter out less important information from the information collected on the interactive television program guide advertisement usage with a filter based on specific advertisements.

30. The system defined in claim 1 wherein the system is further configured to collect information for multiple user profiles.

31. The system defined in claim 1 further configured to:
collect real-time ratings information; and
display the real-time ratings information on the user television equipment.

32. The system defined in claim 1 wherein the system is further configured to collect information on the usage of the selected advertisements in the interactive television program guide by substantially all users of the system.

33. The system defined in claim 1 wherein the system is further configured to collect information on the usage of the selected advertisements in the interactive television program guide by a subset of users of the system.

34. The system of claim 1, wherein the system is further configured to display program guide display screens on the user television equipment with the interactive television program guide; and
collect information on which program guide display screens are displayed in the interactive television program guide.

35. A method for monitoring advertisement usage in a system in which advertisements are displayed for users by an interactive television program guide implemented on user television equipment, comprising the steps of:
displaying the interactive television program guide advertisements on the user television equipment with the interactive television program guide;
allowing the user to select certain displayed interactive television program guide advertisements using a remote control; and
collecting information on which of the displayed interactive television program guide advertisements are selected by the user with the remote control; and
collecting information on the location in the program guide where the interactive television program guide advertisements are displayed to determine usage of the displayed interactive television program guide advertisements in the interactive television program guide.

36. The method defined in claim 35 wherein the step of collecting information on the usage of the displayed interactive television program guide advertisements further comprises the step of collecting information on the amount that the interactive television program guide advertisements are displayed.

37. The method defined in claim 35 further comprising the step of collecting information on which interactive television program guide advertisements are displayed.

38. The method defined in claim 35 wherein the step of collecting information on the usage of the displayed interactive television program guide advertisements further comprises the step of collecting advertisement identifier information which identifies which interactive television program guide advertisements are displayed.

39. The method defined in claim 35 wherein the step of collecting information on the usage of the displayed interactive television program guide advertisements further comprises the step of collecting information on the number of times each interactive television program guide advertisement is displayed.

40. The method defined in claim 35 wherein the step of collecting information on the usage of the displayed interactive television program guide advertisements further comprises the step of collecting information on which program guide screens interactive television program guide advertisements are displayed on.

41. The method defined in claim 35 wherein the step of collecting information on the usage of the displayed interactive television program guide advertisements further comprises the step of collecting information on which screens are active when the certain displayed interactive television program guide advertisements is selected by one of the users.

42. The method defined in claim 35 wherein the step of collecting information on the usage of the displayed interactive television program guide advertisements further comprises the step of collecting information on which user actions result directly from selection of the certain displayed interactive television program guide advertisements by one of the users.

43. The method defined in claim 35 wherein the step of collecting information on the usage of the displayed interactive television program guide advertisements further comprises the step of collecting information on the times that interactive television program guide advertisements are displayed.

44. The method defined in claim 35 wherein the step of collecting information on the usage of the displayed interactive television program guide advertisements further comprises the step of collecting information on the times that actions are taken automatically by the program guide.

45. The method defined in claim 35 further comprising the step of collecting information on which screens are displayed by the program guide.

46. The method defined in claim 35 further comprising the step of collecting screen identifier information that uniquely identifies which program guide screens are displayed by the program guide.

47. The method defined in claim 35 further comprising the step of collecting information on the frequency with which certain program guide screens are displayed by the program guide.

48. The method defined in claim 35 further comprising the step of collecting information on the duration for which program guide screens are displayed by the program guide.

49. The method defined in claim 35 further comprising the step of collecting information on how users arrive at program guide screens in the program guide.

50. The method defined in claim 35 further comprising the step of collecting information on which television programs are displayed on the user television equipment.

51. The method defined in claim 35 further comprising the step of collecting information on whether a user interacts with the program guide during the display of a certain program on the user television equipment.

52. The method defined in claim 35 further comprising the step of collecting information on whether the user television equipment is muted during the display of a certain program on the user television equipment.

53. The method defined in claim 35 further comprising the step of collecting information on whether a screen overlay is present on the user television equipment during the display of a certain program on the user television equipment.

54. The method defined in claim 35 further comprising the step of collecting information on which non-program-guide applications are used on the user television equipment.

55. The method defined in claim 35 further comprising the step of collecting information with the program guide on which non-program-guide applications are used on the user television equipment.

56. The method defined in claim 35 further comprising the step of collecting information on how users invoke non-program-guide applications on the user television equipment.

57. The method defined in claim 35 further comprising the step of collecting information on the amount that non-program-guide applications are used on the user television equipment.

58. The method defined in claim 35 wherein the interactive television program guide advertisements are transmitted to the user television equipment from a television distribution facility, the method further comprising the step of monitoring when the interactive television program guide advertisements are transmitted from the television distribution facility to the user television equipment.

59. The method defined in claim 35 wherein the interactive television program guide advertisements are transmitted to the user television equipment from a television distribution facility, the method further comprising the step of monitoring when the interactive television program guide advertisements that are transmitted from the television distribution facility are received at the user television equipment.

60. The method defined in claim 35 wherein the interactive television program guide advertisements are transmitted to a television distribution facility from a main facility, the method further comprising the step of monitoring when the interactive television program guide advertisements are transmitted from the main facility to the television distribution facility.

61. The method defined in claim 35 wherein the information that is collected on the usage of the displayed interactive television program guide advertisements in the program guide is transmitted from the user television equipment to a data processing facility, the method further comprising the step of filtering out less important information from the collected information prior to transmission of the collected information from the user television equipment.

62. The method defined in claim 35 wherein the information that is collected on the usage of the displayed interactive television program guide advertisements in the program guide is transmitted from the user television equipment to a data processing facility, the method further comprising the step of filtering out less important information from the collected information at the data processing facility.

63. The method defined in claim 35 further comprising the step of filtering out less important information from the information collected on the interactive television program guide advertisement usage with a filter based on specific advertisements.

64. The method defined in claim 35 wherein the step of collecting information on the displayed interactive television program guide advertisement usage further comprises the step of collecting information for multiple user profiles.

65. The method defined in claim 35 further comprising the steps of:
collecting real-time ratings information; and
displaying the real-time ratings information on the user television equipment.

66. The method defined in claim 35 wherein the step of collecting information on the usage of the displayed interactive television program guide advertisements further comprises the step of collecting information on the usage of the selected advertisements in the interactive television program guide by substantially all users of the system.

67. The method defined in claim 35 wherein the step of collecting information on the usage of the displayed interactive television program guide advertisements further comprises the step of collecting information on the usage of the selected advertisements in the interactive television program guide by a subset of users of the system.

68. The method of claim 35, further comprising displaying program guide display screens on the user television equipment with the interactive television program guide; and
collecting information on which program guide display screens are displayed in the interactive television program guide.

## Patentansprüche

1. System zum Überwachen der Anzeigenbenutzung, wobei interaktive Fernsehprogrammführungs-Anzeigen für Benutzer durch eine interaktive Fernsehprogrammführung, ausgeführt auf einem Benutzer-Fernsehgerät, angezeigt werden, wobei das System so konfiguriert ist,
um die interaktiven Fernsehprogrammführungs-Anzeigen auf dem Benutzer-Fernsehgerät mit der interaktiven Fernsehprogrammführung anzuzeigen;
um dem Benutzer zu ermöglichen, bestimmte, angezeigte, interaktive Fernsehprogrammführungs-Anzeigen unter Verwendung einer Fernsteuerung auszuwählen; und
um Informationen zu sammeln, auf denen die angezeigten, interaktiven Fernsehprogrammführungs-Anzeigen durch den Benutzer mit der Fernsteuerung ausgewählt werden; und
um Informationen an der Stelle in der Programmführung zu sammeln, wo die interaktiven Fernsehprogrammführungs-Anzeigen angezeigt werden, um eine Benutzung der angezeigten, interaktiven Fernsehprogrammführungs-Anzeigen in der interaktiven Fernsehprogrammführung zu bestimmen.

2. System nach Anspruch 1, wobei das System weiterhin so konfiguriert ist, um Informationen über den Umfang zu sammeln, dass die interaktiven Fernsehprogrammführungs-Anzeigen angezeigt werden.

3. System nach Anspruch 1, wobei das System weiterhin so konfiguriert ist, um Informationen darüber zu sammeln, welche interaktiven Fernsehprogrammführungs-Anzeigen angezeigt werden.

4. System nach Anspruch 1, wobei das System weiterhin so konfiguriert ist, um Anzeigen-Identifizierer-Informationen zu sammeln, die identifizieren, welche der interaktiven Fernsehprogrammführungs-Anzeigen angezeigt werden.

5. System nach Anspruch 1, wobei das System weiterhin so konfiguriert ist, um Informationen über die Anzahl zu sammeln, für die die interaktive Fernsehprogrammführungs-Anzeige angezeigt ist.

6. System nach Anspruch 1, wobei das System weiterhin so konfiguriert ist, um Informationen darüber zu sammeln, auf welchen Programmführungs-Bildschirmen die interaktiven Fernsehprogrammführungs-Anzeigen angezeigt werden.

7. System nach Anspruch 1, wobei das System weiterhin so konfiguriert ist, um Informationen darüber zu sammeln, welche Bildschirme aktiv sind, wenn die bestimmten, angezeigten, interaktiven Fernsehprogrammführungs-Anzeigen durch einen der Benutzer ausgewählt sind.

8. System nach Anspruch 1, wobei das System weiterhin so konfiguriert ist, um Informationen darüber zu sammeln, welche Benutzervorgänge direkt von einer Auswahl der bestimmten, angezeigten, interaktiven Fernsehprogrammführungs-Anzeigen durch einen der Benutzer resultieren.

9. System nach Anspruch 1, wobei das System weiterhin so konfiguriert ist, um Informationen zu den Zeiten zu sammeln, zu denen die interaktiven Fernsehprogrammführungs-Anzeigen angezeigt werden.

10. System nach Anspruch 1, wobei das System weiterhin so konfiguriert ist, um Informationen zu den Zeiten zu sammeln, zu denen Vorgänge automatisch durch die Programmführung vorgenommen sind.

11. System nach Anspruch 1, wobei das System weiterhin so konfiguriert ist, um Informationen darüber zu sammeln, welche Bildschirme durch die Programmführung angezeigt werden.

12. System nach Anspruch 1, wobei das System weiterhin so konfiguriert ist, um Bildschirm-Identifizierer-Informationen zu sammeln, die eindeutig identifizieren, welche Programmführungs-Bildschirme durch die Programmführung angezeigt werden.

13. System nach Anspruch 1, wobei das System weiterhin so konfiguriert ist, um Informationen über die Häufigkeit zu sammeln, mit der bestimmte Programmführungs-Bildschirme durch die Programmführung anzeigt werden.

14. System nach Anspruch 1, wobei das System weiterhin so konfiguriert ist, um Informationen über die Dauer zu sammeln, für die die Programmführungs-Bildschirme durch die Programmführung angezeigt werden.

15. System nach Anspruch 1, wobei das System weiterhin so konfiguriert ist, um Informationen darüber zu sammeln, wie Benutzer an Programmführungs-Bildschirmen in der Programmführung ankommen.

16. System nach Anspruch 1, wobei das System weiterhin so konfiguriert ist, um Informationen darüber zu sammeln, bei welcher Fernsehsendung Programme an dem Benutzer-Fernsehgerät angezeigt werden.

17. System nach Anspruch 1, wobei das System weiterhin so konfiguriert ist, um Informationen darüber zu sammeln, ob ein Benutzer mit der Programmführung während der Anzeige eines bestimmten Programms an dem Benutzer-Fernsehgerät interaktiv ist.

18. System nach Anspruch 1, wobei das System weiterhin so konfiguriert ist, um Informationen darüber zu sammeln, ob das Benutzer-Fernsehgerät während der Anzeige eines bestimmten Programms an dem Benutzer-Fernsehgerät auf stumm gestellt ist.

19. System nach Anspruch 1, wobei das System weiterhin so konfiguriert ist, um Informationen darüber zu sammeln, ob eine Bildschirmüberlegung an dem Benutzer-Fernsehgerät während der Anzeige eines bestimmten Programms an dem Benutzer-Fernsehgerät vorhanden ist.

20. System nach Anspruch 1, wobei das System weiterhin so konfiguriert ist, um Informationen darüber zu sammeln, welche Nicht-Programm-Führungs-Anwendungen an dem Benutzer-Fernsehgerät verwendet werden.

21. System nach Anspruch 1, wobei das System weiterhin so konfiguriert ist, um Informationen mit der Programmführung zu sammeln, welche Nicht-Programm-Führungs-Anwendungen an dem Benutzer-Fernsehgerät verwendet werden.

22. System nach Anspruch 1, wobei das System weiterhin so konfiguriert ist, um Informationen darüber zu sammeln, wie Benutzer Nicht-Programm-Führungs-Anwendungen an dem Benutzer-Fernsehgerät aufrufen.

23. System nach Anspruch 1, wobei das System weiterhin so konfiguriert ist, um Informationen über den Umfang, in dem Nicht-Programm-Führungs-Anwendungen an dem Benutzer-Fernsehgerät verwendet werden, zu sammeln.

24. System nach Anspruch 1, wobei die interaktiven Fernsehprogrammführungs-Anzeigen zu dem Benutzer-Fernsehgerät von einer Fernsehverteilungsstelle aus gesendet werden, wobei das System weiterhin so konfiguriert ist, um zu überwachen, wenn die interaktiven Fernsehprogrammführungs-Anzeigen von der Fernsehverteilungsstelle zu dem Benutzer-Fernsehgerät übertragen werden.

25. System nach Anspruch 1, wobei die interaktiven Fernsehprogrammführungs-Anzeigen zu dem Benutzer-Fernsehgerät von einer Fernsehverteilungsstelle übertragen werden, wobei das System weiterhin so konfiguriert ist, um zu überwachen, wenn die interaktiven Fernsehprogrammführungs-Anzeigen, die von der Fernsehverteilungsstelle übertragen sind, an dem Benutzer-Fernsehgerät empfangen werden.

26. System nach Anspruch 1, wobei die interaktiven Fernsehprogrammführungs-Anzeigen zu einer Fernsehverteilungsstelle von einer Hauptstelle aus übertragen werden, wobei das System weiterhin so konfiguriert ist, um zu überwachen, wenn die interaktiven Fernsehprogrammführungs-Anzeigen von der Hauptstelle zu der Fernsehverteilungsstelle übertragen werden.

27. System nach Anspruch 1, wobei die Informationen, die bei der Benutzung der interaktiven Fernsehprogrammführungs-Anzeigen in der Programmführung gesammelt sind, von dem Benutzer-Fernsehgerät zu einer Datenverarbeitungsstelle übertragen werden, wobei das System weiterhin so konfiguriert ist, um weniger wichtige Informationen von den gesammelten Informationen vor einer Übertragung der gesammelten Informationen von dem Benutzer-Fernsehgerät herauszufiltern.

28. System nach Anspruch 1, wobei die Informationen, die bei der Benutzung der interaktiven Fernsehprogrammführungs-Anzeigen in der Programmführung gesammelt sind, von dem Benutzer-Fernsehgerät zu einer Datenverarbeitungsstelle übertragen werden, wobei das System weiterhin so konfiguriert ist, um weniger wichtige Informationen von den gesammelten Informationen an der Datenverarbeitungsstelle herauszufiltern.

29. System nach Anspruch 1, wobei das System weiterhin so konfiguriert ist, um weniger wichtige Informationen von den Informationen, gesammelt bei der interaktiven Fernsehprogrammführungs-Anzeige-Benutzung, mit einem Filter, basierend auf spezifischen Anzeigen, herauszufiltern.

30. System nach Anspruch 1, wobei das System weiterhin so konfiguriert ist, um Informationen für mehrere Benutzer-Profile zu sammeln.

31. System nach Anspruch 1, das weiterhin so konfiguriert ist, um Realzeit-Beurteilungs-Informationen zu sammeln; und
um die Realzeit-Beurteilungs-Informationen an dem Benutzer-Fernsehgerät anzuzeigen.

32. System nach Anspruch 1, wobei das System weiterhin so konfiguriert ist, um Informationen über die Benutzung der ausgewählten Anzeigen in der interaktiven Fernsehprogrammführung durch im Wesentlichen alle Benutzer des Systems zu sammeln.

33. System nach Anspruch 1, wobei das System weiterhin so konfiguriert ist, um Informationen über die Benutzung der ausgewählten Anzeigen in der interaktiven Fernsehprogrammführung durch eine Teilmenge von Benutzern des Systems zu sammeln.

34. System nach Anspruch 1, wobei das System weiterhin so konfiguriert ist, um Programmführungs-Anzeigebildschirme an dem Benutzer-Fernsehgerät mit der interaktiven Fernsehprogrammführung anzuzeigen; und
um Informationen darüber zu sammeln, weiche Programmführungs-Anzeigebildschirme in der interaktiven Fernsehprogrammführung angezeigt werden.

35. Verfahren zum Überwachen einer Anzeige-Benutzung in einem System, in dem Anzeigen für Benutzer durch eine interaktive Fernsehprogrammführung, ausgeführt an dem Benutzer-Fernsehgerät, angezeigt werden, das die Schritte aufweist:
Anzeigen der interaktiven Fernsehprogrammführungs-Anzeigen an dem Benutzer-Fernsehgerät mit der interaktiven Fernsehprogrammführung;
Zulassen, dass der Benutzer bestimmte, angezeigte, interaktive Fernsehprogrammführungs-Anzeigen, unter Verwendung einer Fernsteuerung, auswählt; und
Sammeln von Informationen darüber, welche der angezeigten, interaktiven Fernsehprogrammführungs-Anzeigen durch den Benutzer mit der Fernsteuerung ausgewählt werden; und
Sammeln von Informationen über die Stelle in der Programmführung, wo die interaktiven Fernsehprogrammführungs-Anzeigen angezeigt werden, um eine Benutzung der angezeigten, interaktiven Fernsehprogrammführungs-Anzeigen in der interaktiven Fernsehprogrammführung zu bestimmen.

36. Verfahren nach Anspruch 35, wobei der Schritt eines Sammelns von Informationen über die Benutzung der angezeigten, interaktiven Fernsehprogrammführungs-Anzeigen weiterhin den Schritt eines Sammelns von Informationen über den Umfang, mit dem die interaktiven Fernsehprogrammführungs-Anzeigen angezeigt werden, aufweist.

37. Verfahren nach Anspruch 35, das weiterhin den Schritt eines Sammelns von Informationen darüber aufweist, welche interaktiven Fernsehprogrammführungs-Anzeigen angezeigt werden.

38. Verfahren nach Anspruch 35, wobei der Schritt eines Sammelns von Informationen über die Benutzung der angezeigten, interaktiven Fernsehprogrammführungs-Anzeigen weiterhin den Schritt eines Sammelns von Anzeigen-Identifizierer-Informationen aufweist, die identifizieren, welche interaktiven Fernsehprogrammführungs-Anzeigen angezeigt werden.

39. Verfahren nach Anspruch 35, wobei der Schritt eines Sammelns von Informationen über die Benutzung der angezeigten, interaktiven Fernsehprogrammführungs-Anzeigen weiterhin den Schritt eines Sammelns von Informationen über die Anzahl, für die eine interaktive Fernsehprogrammführungs-Anzeige angezeigt wird, aufweist.

40. Verfahren nach Anspruch 35, wobei der Schritt eines Sammelns von Informationen über die Benutzung der angezeigten, interaktiven Fernsehprogrammführungs-Anzeigen weiterhin den Schritt eines Sammelns von Informationen darüber aufweist, welche interaktiven Fernsehprogrammführungs-Anzeigen von Programmführungs-Bildschirmen angezeigt werden.

41. Verfahren nach Anspruch 35, wobei der Schritt eines Sammelns von Informationen über die Benutzung der angezeigten, interaktiven Fernsehprogrammführungs-Anzeigen weiterhin den Schritt eines Sammelns von Informationen darüber aufweist, welche Bildschirme aktiv sind, wenn die bestimmten, angezeigten, interaktiven Fernsehprogrammführungs-Anzeigen durch einen der Benutzer ausgewählt werden.

42. Verfahren nach Anspruch 35, wobei der Schritt eines Sammelns von Informationen über die Benutzung der angezeigten, interaktiven Fernsehprogrammführungs-Anzeigen weiterhin den Schritt eines Sammelns von Informationen darüber aufweist, welche Benutzervorgänge direkt von einer Auswahl der bestimmten, angezeigten, interaktiven Fernsehprogrammführungs-Anzeigen durch einen der Benutzer resultieren.

43. Verfahren nach Anspruch 35, wobei der Schritt eines Sammelns von Informationen über die Benutzung der angezeigten, interaktiven Fernsehprogrammführungs-Anzeigen weiterhin den Schritt eines Sammelns von Informationen über die Anzahl, für die die interaktiven Fernsehprogrammführungs-Anzeigen angezeigt werden, aufweist.

44. Verfahren nach Anspruch 35, wobei der Schritt eines Sammelns von Informationen über die Benutzung der angezeigten, interaktiven Fernsehprogrammführungs-Anzeigen weiterhin den Schritt eines Sammelns von Informationen zu den Zeiten, zu denen Vorgänge automatisch durch die Programmführung vorgenommen sind, aufweist.

45. Verfahren nach Anspruch 35, das weiterhin den Schritt eines Sammelns von Informationen darüber, welche Bildschirme durch die Programmführung angezeigt werden, aufweist.

46. Verfahren nach Anspruch 35, das weiterhin den Schritt eines Sammelns von Bildschirm-Identifizierer-Informationen aufweist, die eindeutig identifizieren, welche Programmführungs-Bildschirme durch die Programmführung angezeigt werden.

47. Verfahren nach Anspruch 35, das weiterhin den Schritt eines Sammelns von Informationen über die Häufigkeit aufweist, mit der bestimmte Programmführungs-Bildschirme durch die Programmführung angezeigt werden.

48. Verfahren nach Anspruch 35, das weiterhin den Schritt eines Sammelns von Informationen über die Dauer aufweist, für die Programmführungs-Bildschirme durch die Programmführung angezeigt werden.

49. Verfahren nach Anspruch 35, das weiterhin den Schritt eines Sammelns von Informationen darüber aufweist, wie Benutzer an Programmführungs-Bildschirmen in der Programmführung ankommen.

50. Verfahren nach Anspruch 35, das weiterhin den Schritt eines Sammelns von Informationen darüber aufweist, welche Fernsehprogramme an dem Benutzer-Fernsehgerät angezeigt werden.

51. Verfahren nach Anspruch 35, das weiterhin den Schritt eines Sammelns von Informationen darüber aufweist, ob ein Benutzer mit der Programmführung während der Anzeige eines bestimmten Programms an dem Benutzer-Fernsehgerät interaktiv ist.

52. Verfahren nach Anspruch 35, das weiterhin den Schritt eines Sammelns von Informationen darüber aufweist, ob das Benutzer-Fernsehgerät während der Anzeige eines bestimmten Programms an dem Benutzer-Fernsehgerät auf stumm geschaltet ist.

53. Verfahren nach Anspruch 35, das weiterhin den Schritt eines Sammelns von Informationen darüber aufweist, ob eine Bildschirmüberlegung an dem Benutzer-Fernsehgerät während der Anzeige eines bestimmten Programms an dem Benutzer-Fernsehgerät vorhanden ist.

54. Verfahren nach Anspruch 35, das weiterhin den Schritt eines Sammelns von Informationen darüber aufweist, welche Nicht-Programm-Führungs-Anwendungen an dem Benutzer-Fernsehgerät verwendet sind.

55. Verfahren nach Anspruch 35, das weiterhin den Schritt eines Sammelns von Informationen mit der Programmführung darüber aufweist, welche Nicht-Programm-Führungs-Anwendungen an dem Benutzer-Fernsehgerät verwendet werden.

56. Verfahren nach Anspruch 35, das weiterhin den Schritt eines Sammelns von Informationen darüber aufweist, wie Benutzer Nicht-Programm-Führungs-Anwendungen an dem Benutzer-Fernsehgerät aufrufen.

57. Verfahren nach Anspruch 35, das weiterhin den Schritt eines Sammelns von Informationen über den Umfang, in dem Nicht-Programm-Führungs-Anwendungen an dem Benutzer-Fernsehgerät verwendet werden, aufweist.

58. Verfahren nach Anspruch 35, wobei die interaktiven Fernsehprogrammführungs-Anzeigen zu dem Benutzer-Fernsehgerät von einer Fernsehverteilungsstelle aus übertragen werden, wobei das Verfahren weiterhin den Schritt eines Überwachens aufweist, wenn die interaktiven Fernsehprogrammführungs-Anzeigen von der Fernsehverteilungsstelle zu dem Benutzer-Fernsehgerät übertragen werden.

59. Verfahren nach Anspruch 35, wobei die interaktiven Fernsehprogrammführungs-Anzeigen zu dem Benutzer-Fernsehgerät von einer Fernsehverteilungsstelle aus übertragen werden, wobei das Verfahren weiterhin den Schritt eines Überwachens aufweist, wenn die interaktiven Fernsehprogrammführungs-Anzeigen, die von der Fernsehverteilungsstelle aus übertragen werden, an dem Benutzer-Fernsehgerät empfangen werden.

60. Verfahren nach Anspruch 35, wobei die interaktiven Fernsehprogrammführungs-Anzeigen zu einer Fernsehverteilungsstelle von einer Hauptstelle aus übertragen werden, wobei das Verfahren weiterhin den Schritt eines Überwachens aufweist, wenn die interaktiven Fernsehprogrammführungs-Anzeigen von der Hauptstelle zu der Fernsehverteilungsstelle übertragen werden.

61. Verfahren nach Anspruch 35, wobei die Informationen, die bei der Benutzung der angezeigten, interaktiven Fernsehprogrammführungs-Anzeigen in der Programmführung gesammelt werden, von dem Benutzer-Fernsehgerät zu einer Datenverarbeitungsstelle übertragen werden, wobei das Verfahren weiterhin den Schritt eines Herausfiltern von weniger wichtigen Informationen aus den gesammelten Informationen vor einer Übertragung der gesammelten Informationen von dem Benutzer-Fernsehgerät aufweist.

62. Verfahren nach Anspruch 35, wobei die Informationen, die bei der Benutzung der angezeigten, interaktiven Fernsehprogrammführungs-Anzeigen in der Programmführung gesammelt werden, von dem Benutzer-Fernsehgerät zu einer Datenverarbeitungsstelle übertragen werden, wobei das Verfahren weiterhin den Schritt eines Herausfilterns von weniger wichtigen Informationen aus den gesammelten Informationen an der Datenverarbeitungsstelle aufweist.

63. Verfahren nach Anspruch 35, das weiterhin den Schritt eines Herausfilterns von weniger wichtigen Informationen aus den Informationen, gesammelt bei der interaktiven Fernsehprogrammführungs-Anzeige-Benutzung, mit einem Filter, basierend auf spezifischen Anzeigen, aufweist.

64. Verfahren nach Anspruch 35, wobei der Schritt eines Sammelns von Informationen bei der angezeigten, interaktiven Fernsehprogrammführungs-Anzeige-Benutzung, weiterhin den Schritt eines Sammelns von Informationen für mehrere Benutzerprofile aufweist.

65. Verfahren nach Anspruch 35, das weiterhin die Schritte aufweist:
Sammeln von Realzeit-Bewertungs-Informationen; und
Anzeigen der Realzeit-Bewertungs-Informationen an dem Benutzer-Fernsehgerät.

66. Verfahren nach Anspruch 35, wobei der Schritt eines Sammelns von Informationen bei der Benutzung der angezeigten, interaktiven Fernsehprogrammführungs-Anzeigen weiterhin den Schritt eines Sammelns von Informationen bei der Benutzung der ausgewählten Anzeigen in der interaktiven Fernsehprogrammführung durch im Wesentlichen alle Benutzer des Systems aufweist.

67. Verfahren nach Anspruch 35, wobei der Schritt eines Sammelns von Informationen bei der Benutzung der angezeigten, interaktiven Fernsehprogrammführungs-Anzeigen weiterhin den Schritt eines Sammeln von Informationen bei der Benutzung der ausgewählten Anzeigen in der interaktiven Fernsehprogrammführung durch eine Teilmenge von Benutzern des Systems aufweist.

68. Verfahren nach Anspruch 35, das weiterhin Anzeigeprogramm-Führungsanzeigebildschirme an dem Benutzer-Fernsehgerät mit der interaktiven Fernsehprogrammführung; und
Sammeln von Informationen darüber, welche Programmführungs-Anzeigebildschirme in der interaktiven Fernsehprogrammführung angezeigt werden;
aufweist.

## Revendications

1. Système permettant de contrôler l'utilisation d'annonces publicitaires dans lequel des annonces publicitaires du guide interactif de programmes de télévision sont affichées pour des utilisateurs par un guide interactif de programmes de télévision mis en oeuvre sur un matériel de télévision utilisateur, dans lequel le système est configuré pour :
afficher les annonces publicitaires du guide interactif de programmes de télévision sur le matériel de télévision utilisateur avec le guide interactif de programmes de télévision ;
permettre à l'utilisateur de sélectionner certaines annonces publicitaires du guide interactif de programmes de télévision affichées à l'aide d'une commande à distance, et
collecter des informations indiquant celles parmi les annonces publicitaires du guide interactif de programmes de télévision affichées qui sont sélectionnées par l'utilisateur à l'aide de la commande à distance, et
collecter des informations concernant l'endroit dans le guide de programmes où les annonces publicitaires du guide interactif de programmes de télévision sont affichées pour déterminer l'utilisation des annonces publicitaires du guide interactif de programmes de télévision affichées dans le guide interactif de programmes de télévision.

2. Système suivant la revendication 1 dans lequel le système est en outre configuré pour collecter des informations indiquant la quantité d'annonces publicitaires du guide interactif de programmes de télévision qui sont affichées.

3. Système suivant la revendication 1 dans lequel le système est en outre configuré pour collecter des informations indiquant celles parmi les annonces publicitaires du guide interactif de programmes de télévision qui sont affichées.

4. Système suivant la revendication 1 dans lequel le système est en outre configuré pour collecter des informations d'identificateur d'annonce publicitaire qui identifient celles parmi les annonces publicitaires du guide interactif de programmes de télévision qui sont affichées.

5. Système suivant la revendication 1 dans lequel le système est en outre configuré pour collecter des informations indiquant le nombre de fois que chacune des annonces publicitaires du guide interactif de programmes de télévision est affichée.

6. Système suivant la revendication 1 dans lequel le système est en outre configuré pour collecter des informations indiquant sur quels écrans du guide de programmes les annonces publicitaires du guide interactif de programmes de télévision sont affichées.

7. Système suivant la revendication 1 dans lequel le système est en outre configuré pour collecter des informations indiquant quels écrans sont actifs lorsqu'une certaine des annonces publicitaires du guide interactif de programmes de télévision affichées est sélectionnée par un des utilisateurs.

8. Système suivant la revendication 1 dans lequel le système est en outre configuré pour collecter des informations indiquant quelles actions de l'utilisateur résultent directement de la sélection d'une certaine des annonces publicitaires du guide interactif de programmes de télévision affichées par un des utilisateurs.

9. Système suivant la revendication 1 dans lequel le système est en outre configuré pour collecter des informations indiquant les moments où les annonces publicitaires du guide interactif de programmes de télévision sont affichées.

10. Système suivant la revendication 1 dans lequel le système est en outre configuré pour collecter des informations indiquant les moments où des actions sont effectuées automatiquement par le guide de programmes.

11. Système suivant la revendication 1 dans lequel le système est en outre configuré pour collecter des informations indiquant quels écrans sont affichés par le guide de programmes.

12. Système suivant la revendication 1 dans lequel le système est en outre configuré pour collecter des informations d'identificateur d'écran qui identifient exclusivement quels écrans du guide de programmes sont affichés par le guide de programmes.

13. Système suivant la revendication 1 dans lequel le système est en outre configuré pour collecter des informations indiquant à quelle fréquence certains écrans du guide de programmes sont affichés par le guide de programmes.

14. Système suivant la revendication 1 dans lequel le système est en outre configuré pour collecter des informations indiquant la durée pendant laquelle des écrans du guide de programmes sont affichés par le guide de programmes.

15. Système suivant la revendication 1 dans lequel le système est en outre configuré pour collecter des informations indiquant de quelle manière des utilisateurs parviennent aux écrans du guide de programmes dans le guide de programmes.

16. Système suivant la revendication 1 dans lequel le système est en outre configuré pour collecter des informations indiquant quels programmes de télévision sont affichés sur le matériel de télévision utilisateur.

17. Système suivant la revendication 1 dans lequel le système est en outre configuré pour collecter des informations indiquant si oui ou non un utilisateur interagit avec le guide de programmes pendant l'affichage d'un certain programme sur le matériel de télévision utilisateur.

18. Système suivant la revendication 1 dans lequel le système est en outre configuré pour collecter des informations indiquant si oui ou non le matériel de télévision utilisateur est mis sous silencieux pendant l'affichage d'un certain programme sur le matériel de télévision utilisateur.

19. Système suivant la revendication 1 dans lequel le système est en outre configuré pour collecter des informations indiquant si oui ou non une superposition d'écran est présente sur le matériel de télévision utilisateur pendant l'affichage d'un certain programme sur le matériel de télévision utilisateur.

20. Système suivant la revendication 1 dans lequel le système est en outre configuré pour collecter des informations indiquant quelles applications sans rapport avec le guide de programmes sont utilisées sur le matériel de télévision utilisateur.

21. Système suivant la revendication 1 dans lequel le système est en outre configuré pour collecter des informations avec le guide de programmes indiquant quelles applications sans rapport avec le guide de programmes sont utilisées sur le matériel de télévision utilisateur.

22. Système suivant la revendication 1 dans lequel le système est en outre configuré pour collecter des informations indiquant de quelle manière les utilisateurs appellent des applications sans rapport avec le guide de programmes sur le matériel de télévision utilisateur.

23. Système suivant la revendication 1 dans lequel le système est en outre configuré pour collecter des informations indiquant la quantité d'applications sans rapport avec le guide de programmes qui sont utilisées sur le matériel de télévision utilisateur.

24. Système suivant la revendication 1 dans lequel les annonces publicitaires du guide interactif de programmes de télévision sont transmises au matériel de télévision utilisateur depuis une unité de télédistribution, le système étant en outre configuré pour contrôler à quel moment les annonces publicitaires du guide interactif de programmes de télévision sont transmises de l'unité de télédistribution au matériel de télévision utilisateur.

25. Système suivant la revendication 1 dans lequel les annonces publicitaires du guide interactif de programmes de télévision sont transmises au matériel de télévision utilisateur depuis une unité de télédistribution, le système étant en outre configuré pour contrôler à quel moment les annonces publicitaires du guide interactif de programmes de télévision qui sont transmises de l'unité de télédistribution sont reçues par le matériel de télévision utilisateur.

26. Système suivant la revendication 1 dans lequel les annonces publicitaires du guide interactif de programmes de télévision sont transmises à une unité de télédistribution depuis une unité principale, dans lequel le système est en outre configuré pour contrôler à quel moment les annonces publicitaires du guide interactif de programmes de télévision sont transmises de l'unité principale à l'unité de télédistribution.

27. Système suivant la revendication 1 dans lequel les informations qui sont collectées concernant l'utilisation des annonces publicitaires du guide interactif de programmes de télévision dans le guide de programmes sont transmises du matériel de télévision utilisateur à une unité de traitement de données, le système étant en outre configuré pour éliminer par filtrage des informations moins importantes des informations collectées avant la transmission des informations collectées du matériel de télévision utilisateur.

28. Système suivant la revendication 1 dans lequel les informations qui sont collectées concernant l'utilisation des annonces publicitaires du guide interactif de programmes de télévision dans le guide de programmes sont transmises du matériel de télévision utilisateur à une unité de traitement de données, le système étant en outre configuré pour éliminer par filtrage des informations moins importantes des informations collectées au niveau de l'unité de traitement de données.

29. Système suivant la revendication 1 dans lequel le système est en outre configuré pour éliminer par filtrage des informations moins importantes des informations collectées concernant l'utilisation des annonces publicitaires du guide interactif de programmes de télévision avec un filtre basé sur des annonces publicitaires spécifiques.

30. Système suivant la revendication 1 dans lequel le système est en outre configuré pour collecter des informations pour plusieurs profils d'utilisateur.

31. Système suivant la revendication 1 en outre configuré pour :
collecter des informations de classifications en temps réel, et
afficher les informations de classifications en temps réel sur le matériel de télévision utilisateur.

32. Système suivant la revendication 1 dans lequel le système est en outre configuré pour collecter des informations concernant l'utilisation des annonces publicitaires sélectionnées dans le guide interactif de programmes de télévision par pratiquement tous les utilisateurs du système.

33. Système suivant la revendication 1 dans lequel le système est en outre configuré pour collecter des informations concernant l'utilisation des annonces publicitaires sélectionnées dans le guide interactif de programmes de télévision par un sous-ensemble d'utilisateurs du système.

34. Système suivant la revendication 1 dans lequel le système est en outre configuré pour afficher des écrans d'affichage du guide de programmes sur le matériel de télévision utilisateur avec le guide interactif de programmes de télévision, et
collecter des informations indiquant quels écrans d'affichage du guide de programmes sont affichés dans le guide interactif de programmes de télévision.

35. Procédé permettant de contrôler l'utilisation d'annonces publicitaires dans un système dans lequel des annonces publicitaires sont affichées pour des utilisateurs par un guide interactif de programmes de télévision mis en oeuvre sur un matériel de télévision utilisateur, comprenant les étapes suivantes :
affichage des annonces publicitaires du guide interactif de programmes de télévision sur le matériel de télévision utilisateur avec le guide interactif de programmes de télévision ;
possibilité pour l'utilisateur de sélectionner certaines annonces publicitaires du guide interactif de programmes de télévision affichées à l'aide d'une commande à distance, et
collecte d'informations indiquant celles parmi les annonces publicitaires du guide interactif de programmes de télévision affichées qui sont sélectionnées par l'utilisateur à l'aide de la commande à distance, et
collecte d'informations concernant l'endroit dans le guide de programmes où les annonces publicitaires du guide interactif de programmes de télévision sont affichées pour déterminer l'utilisation des annonces publicitaires du guide interactif de programmes de télévision affichées dans le guide interactif de programmes de télévision.

36. Procédé suivant la revendication 35 dans lequel l'étape de collecte d'informations concernant l'utilisation des annonces publicitaires du guide interactif de programmes de télévision affichées comprend en outre l'étape de collecte d'informations concernant la quantité d'annonces publicitaires du guide interactif de programmes de télévision qui sont affichées.

37. Procédé suivant la revendication 35 comprenant en outre l'étape de collecte d'informations indiquant quelles annonces publicitaires du guide interactif de programmes de télévision sont affichées.

38. Procédé suivant la revendication 35 dans lequel l'étape de collecte d'informations concernant l'utilisation des annonces publicitaires du guide interactif de programmes de télévision affichées comprend en outre l'étape de collecte d'informations d'identificateur d'annonce publicitaire qui identifient quelles annonces publicitaires du guide interactif de programmes de télévision sont affichées.

39. Procédé suivant la revendication 35 dans lequel l'étape de collecte d'informations concernant l'utilisation des annonces publicitaires du guide interactif de programmes de télévision affichées comprend en outre l'étape de collecte d'informations concernant le nombre de fois que chaque annonce publicitaire du guide interactif de programmes de télévision est affichée.

40. Procédé suivant la revendication 35 dans lequel l'étape de collecte d'informations concernant l'utilisation des annonces publicitaires du guide interactif de programmes de télévision affichées comprend en outre l'étape de collecte d'informations indiquant sur quels écrans du guide de programmes les annonces publicitaires du guide interactif de programmes de télévision sont affichées.

41. Procédé suivant la revendication 35 dans lequel l'étape de collecte d'informations concernant l'utilisation des annonces publicitaires du guide interactif de programmes de télévision affichées comprend en outre l'étape de collecte d'informations indiquant quels écrans sont actifs lorsqu'une certaine des annonces publicitaires du guide interactif de programmes de télévision affichées est sélectionnée par un des utilisateurs.

42. Procédé suivant la revendication 35 dans lequel l'étape de collecte d'informations concernant l'utilisation des annonces publicitaires du guide interactif de programmes de télévision affichées comprend en outre l'étape de collecte d'informations indiquant quelles actions de l'utilisateur résultent directement de la sélection d'une certaine des annonces publicitaires du guide interactif de programmes de télévision affichées par un des utilisateurs.

43. Procédé suivant la revendication 35 dans lequel l'étape de collecte d'informations concernant l'utilisation des annonces publicitaires du guide interactif de programmes de télévision affichées comprend en outre l'étape de collecte d'informations concernant les moments où des annonces publicitaires du guide interactif de programmes de télévision sont affichées.

44. Procédé suivant la revendication 35 dans lequel l'étape de collecte d'informations concernant l'utilisation des annonces publicitaires du guide interactif de programmes de télévision affichées comprend en outre l'étape de collecte d'informations concernant les moments où des actions sont effectuées automatiquement par le guide de programmes.

45. Procédé suivant la revendication 35 comprenant en outre l'étape de collecte d'informations indiquant quels écrans sont affichés par le guide de programmes.

46. Procédé suivant la revendication 35 comprenant en outre l'étape de collecte d'informations d'identificateur d'écran qui identifient exclusivement quels écrans du guide de programmes sont affichés par le guide de programmes.

47. Procédé suivant la revendication 35 comprenant en outre l'étape de collecte d'informations concernant la fréquence à laquelle certains écrans du guide de programmes sont affichés par le guide de programmes.

48. Procédé suivant la revendication 35 comprenant en outre l'étape de collecte d'informations concernant la durée pendant laquelle des écrans du guide de programmes sont affichés par le guide de programmes.

49. Procédé suivant la revendication 35 comprenant en outre l'étape de collecte d'informations indiquant de quelle manière des utilisateurs parviennent aux écrans du guide de programmes dans le guide de programmes.

50. Procédé suivant la revendication 35 comprenant en outre l'étape de collecte d'informations indiquant quels programmes de télévision sont affichés sur le matériel de télévision utilisateur.

51. Procédé suivant la revendication 35 comprenant en outre l'étape de collecte d'informations indiquant si oui ou non un utilisateur interagit avec le guide de programmes pendant l'affichage d'un certain programme sur le matériel de télévision utilisateur.

52. Procédé suivant la revendication 35 comprenant en outre l'étape de collecte d'informations indiquant si oui ou non le matériel de télévision utilisateur est mis sous silencieux pendant l'affichage d'un certain programme sur le matériel de télévision utilisateur.

53. Procédé suivant la revendication 35 comprenant en outre l'étape de collecte d'informations indiquant si oui ou non une superposition d'écran est présente sur le matériel de télévision utilisateur pendant l'affichage d'un certain programme sur le matériel de télévision utilisateur.

54. Procédé suivant la revendication 35 comprenant en outre l'étape de collecte d'informations indiquant quelles applications sans rapport avec le guide de programmes sont utilisées sur le matériel de télévision utilisateur.

55. Procédé suivant la revendication 35 comprenant en outre l'étape de collecte d'informations avec le guide de programmes indiquant quelles applications sans rapport avec le guide de programmes sont utilisées sur le matériel de télévision utilisateur.

56. Procédé suivant la revendication 35 comprenant en outre l'étape de collecte d'informations indiquant de quelle manière des utilisateurs appellent des applications sans rapport avec le guide de programmes sur le matériel de télévision utilisateur.

57. Procédé suivant la revendication 35 comprenant en outre l'étape de collecte d'informations indiquant la quantité d'applications sans rapport avec le guide de programmes qui sont utilisées sur le matériel de télévision utilisateur.

58. Procédé suivant la revendication 35 dans lequel les annonces publicitaires du guide interactif de programmes de télévision sont transmises au matériel de télévision utilisateur depuis une unité de télédistribution, le procédé comprenant en outre l'étape de contrôle du moment où les annonces publicitaires du guide interactif de programmes de télévision sont transmises de l'unité de télédistribution au matériel de télévision utilisateur.

59. Procédé suivant la revendication 35 dans lequel les annonces publicitaires du guide interactif de programmes de télévision sont transmises au matériel de télévision utilisateur depuis une unité de télédistribution, le procédé comprenant en outre l'étape de contrôle du moment où les annonces publicitaires du guide interactif de programmes de télévision qui sont transmises de l'unité de télédistribution sont reçues par le matériel de télévision utilisateur.

60. Procédé suivant la revendication 35 dans lequel les annonces publicitaires du guide interactif de programmes de télévision sont transmises à une unité de télédistribution depuis une unité principale, le procédé comprenant en outre l'étape de contrôle du moment où les annonces publicitaires du guide interactif de programmes de télévision sont transmises de l'unité principale à l'unité de télédistribution.

61. Procédé suivant la revendication 35 dans lequel les informations qui sont collectées concernant l'utilisation des annonces publicitaires du guide interactif de programmes de télévision affichées dans le guide de programmes sont transmises du matériel de télévision utilisateur à une unité de traitement de données, le procédé comprenant en outre l'étape d'élimination par filtrage des informations moins importantes des informations collectées avant la transmission des informations collectées du matériel de télévision utilisateur.

62. Procédé suivant la revendication 35 dans lequel les informations qui sont collectées concernant l'utilisation des annonces publicitaires du guide interactif de programmes de télévision affichées dans le guide de programmes sont transmises du matériel de télévision utilisateur à une unité de traitement de données, le procédé comprenant en outre l'étape d'élimination par filtrage des informations moins importantes des informations collectées au niveau de l'unité de traitement de données.

63. Procédé suivant la revendication 35 comprenant en outre l'étape d'élimination par filtrage des informations moins importantes des informations collectées concernant l'utilisation des annonces publicitaires du guide interactif de programmes de télévision avec un filtre basé sur des annonces publicitaires spécifiques.

64. Procédé suivant la revendication 35 dans lequel l'étape de collecte d'informations concernant l'utilisation des annonces publicitaires du guide interactif de programmes de télévision affichées comprend en outre l'étape de collecte d'informations pour plusieurs profils d'utilisateur.

65. Procédé suivant la revendication 35 comprenant en outre les étapes suivantes :
collecte d'informations de classifications en temps réel, et
affichage des informations de classifications en temps réel sur le matériel de télévision utilisateur.

66. Procédé suivant la revendication 35 dans lequel l'étape de collecte d'informations concernant l'utilisation des annonces publicitaires du guide interactif de programmes de télévision affichées comprend en outre l'étape de collecte d'informations concernant l'utilisation des annonces publicitaires sélectionnées dans le guide interactif de programmes de télévision par pratiquement tous les utilisateurs du système.

67. Procédé suivant la revendication 35 dans lequel l'étape de collecte d'informations concernant l'utilisation des annonces publicitaires du guide interactif de programmes de télévision affichées comprend en outre l'étape de collecte d'informations concernant l'utilisation des annonces publicitaires sélectionnées dans le guide interactif de programmes de télévision par un sous-ensemble d'utilisateurs du système.

68. Procédé suivant la revendication 35 comprenant en outre l'affichage d'écrans d'affichage du guide de programmes sur le matériel de télévision utilisateur avec le guide interactif de programmes de télévision, et
la collecte d'informations indiquant quels écrans d'affichage du guide de programmes sont affichés dans le guide interactif de programmes de télévision.
